# EUROPEAN PATENT APPLICATION

(11) **EP 2 476 967 A1**
(43) Date of publication of application: **18.07.2012**
(21) Application number: 10821634.2
(22) Date of filing: 30.08.2010
(51) Int. Cl.: F24F 11/02, F24F 7/007

(54) **AIR-CONDITIONING CONTROL SYSTEM**

(30) Priority: 11.09.2009 JP 2009210851
(71) Applicant: Panasonic Corporation, Kadoma-shi Osaka 571-8501 (JP)
(72) Inventor: MISE, Atsushi, Osaka 540-6207 (JP); HASHIMOTO, Masaru, Osaka 540-6207 (JP); USUKI, Izumi, Osaka 540-6207 (JP)
(74) Representative: Samson & Partner
(86) International application number: PCT/IB2010/002119
(87) International publication number: WO 2011/042777

(57) **Abstract**

In an air-conditioning control system, a ventilating device performs ventilation between an indoor space and an outdoor space, and an absence detecting unit for detecting absence of a human within the indoor space. An air conditioning controller adapted to operated, when the absence of the human is detected by the absence detecting unit, the ventilating device during at least a part of an absence period to control a thermal environment within the indoor space.

## Description

### Field of the Invention

The present invention relates to an air-conditioning control system.

### Background of the Invention

In a house, there is available an air-conditioning control system that turns off air conditioning devices such as an air conditioner to seek energy saving when a dweller is absent within a home or turns on the air conditioner pursuant to a command from a cellular phone to maintain the home as a comfortable space before the dweller comes back home (see, e.g., Japanese Patent Application Publication No. 2008-138902).

The conventional air-conditioning control system essentially controls home appliances, and there has disclosed no system that can effectively use natural energy such as an ambient air to provide a comfortable indoor space to a home-coming family member while seeking energy saving.

In some cases, a dweller is absent within a home for a short time period, e.g., about two or three hours. In other cases, a dweller does not exist within a home for a long time period, e.g., about two or three days. In the event that natural energy is used to provide a comfortable indoor space to a home-coming family member while saving energy, an air conditioner needs to be differently controlled depending on the length of absence time period. However, the conventional air-conditioning control system remains silent on this point.

### Summary of the Invention

In view of the above, the present invention provides an air-conditioning control system capable of providing a comfortable indoor space to a home-coming family member while using natural energy to seek energy saving.

In accordance with an aspect of the present invention, there is provided an air-conditioning control system including a ventilating device for performing ventilation between an indoor space and an outdoor space; an absence detecting unit for detecting absence of a human within the indoor space; and an air conditioning controller adapted to operate, when the absence of the human is detected by the absence detecting unit, the ventilating device during at least a part of an absence period to control a thermal environment within the indoor space.

The system may further include an air conditioning device for cooling or heating the indoor space. The air conditioning controller may be adapted to operate, when the absence of the human is detected by the absence detecting unit, the ventilating device during at least a part of the absence period such that, when operating the air conditioning device next time, the thermal environment within the indoor space is controlled in such a way as to reduce a power consumption of the air conditioning device.

With this configuration, it is possible to provide a comfortable indoor space to a home-coming family member while using natural energy to seek energy saving.

The absence detecting unit may be adapted to, when the absence of the human is detected by the absence detecting unit, make determination whether the absence period is a long period equal to or longer than a predetermined time period or a short period shorter than the predetermined time period, and the air conditioning controller is adapted to control the ventilating device in different control patterns depending on whether the absence period is the long period or the short period.

With this configuration, the air conditioning control throughout the absence period can be adaptively performed depending on whether the absence period is the long period or the short period.

The absence detecting unit may determine whether the absence period is the long period or the short period by comparing the length of the absence period with a threshold, and the threshold may be varied with at least one of year, month, day and hour at which the determination is made.

With this configuration, it is possible to set the threshold in accordance with the life pattern of family members which varies depending on the seasons and the time zone.

The absence detecting unit may determine whether the absence period is the long period or the short period by estimating an end time of the absence period, and the air conditioning controller may be adapted to continuously operate the ventilating device throughout the absence period if the absence period is the short period, and start an operation of the ventilating device a specified time earlier than the end time of the absence period if the absence period is the long period.

With this configuration, if the absence period is the long period, the ventilating device is not operated throughout the entire absence period but is operated for a minimum period immediately before a family member comes home. This makes it possible to prevent an unnecessary power consumption through the absence period and to effectively perform the control of the thermal environment within the home using the ventilating device.

The system may further include a photovoltaic power generating device for generating electric power by using sunlight to supply the electric power to the air conditioning device and the ventilating device. The air conditioning controller may be adapted to operate the air conditioning device and the ventilating device throughout the absence period if the absence period is the long period and the electric power generated by the photovoltaic power generating device is equal to or greater than a predetermined value, and operate the ventilating device a specified time earlier than the end time of the absence period regardless of the magnitude of the electric power generated by the photovoltaic power generating device.

With this configuration, if the electric power generated by the photovoltaic power generating device is equal to or greater than a predetermined value, the air conditioning device and the ventilating device are operated to control the thermal environment within the home beforehand in such a way as to make the home comfortable. This makes it possible to more effectively operate the ventilating device immediately before a family member comes home.

The system may further include a photovoltaic power generating device for generating electric power by using sunlight to supply the electric power to the air conditioning device and the ventilating device; a battery for storing the electric power generated by the photovoltaic power generating device and supplying the electric power to the air conditioning device and the ventilating device; and a reverse power flow control unit for reversely supplying the electric power generated by the photovoltaic power generating device to a commercial power supply system. The air conditioning controller may be adapted to control, if the absence period is the long period, the reverse power flow control unit to reversely supply the electric power generated by the photovoltaic power generating device to the commercial power supply system instead of supplying the electric power to the battery.

With this configuration, the DC power generated by the photovoltaic power generating device is charged to the battery throughout the absence period. However, if the absence period is the long period, the power loss is increased due to the discharge of the battery. In this case, the DC power generated by the photovoltaic power generating device is reversely supplied and sold to other consumers, whereby the generated power can be effectively used in case of the long-term absence.

The absence detecting unit may estimate an end time of the absence period and make determination whether the absence period is a short period shorter than a first predetermined time period, a first long period equal to or longer than the first predetermined time period but shorter than a second predetermined time period, or a second long period longer than the second predetermined time period, and the air conditioning controller may be adapted to continuously operate the ventilating device throughout the absence period if the absence period is the short period, to start an operation of the ventilating device a specified time earlier than the end time of the absence period if the absence period is the first long period or the second long period, and control the reverse power flow control unit to reversely supply the electric power generated by the photovoltaic power generating device to the commercial power supply system instead of supplying the electric power to the battery if the absence period is the second long period.

With this configuration, it is possible to more carefully perform the reverse power flow control and the control of the ventilating device throughout the absence period.

As stated above, the present invention is capable of providing a comfortable indoor space to a home-coming family member while using natural energy to seek energy saving.

### Brief Description of the Drawings

The objects and features of the present invention will become apparent from the following description of embodiments, given in conjunction with the accompanying drawings, in which:
Fig. 1 shows the configuration of an air-conditioning control system in accordance with first and second embodiments.
Fig. 2 shows the configuration of an air-conditioning control system in accordance with a third embodiment.
Fig. 3 shows the configuration of an air-conditioning control system in accordance with a fourth embodiment.

### Detailed Description of the Embodiments

Embodiments of the present invention will now be described in detail with reference to the accompanying drawings which forms a part of the subject specification. Identical or similar components throughout the drawings will be designated by like reference symbols and will not be described repeatedly.

### (First Embodiment)

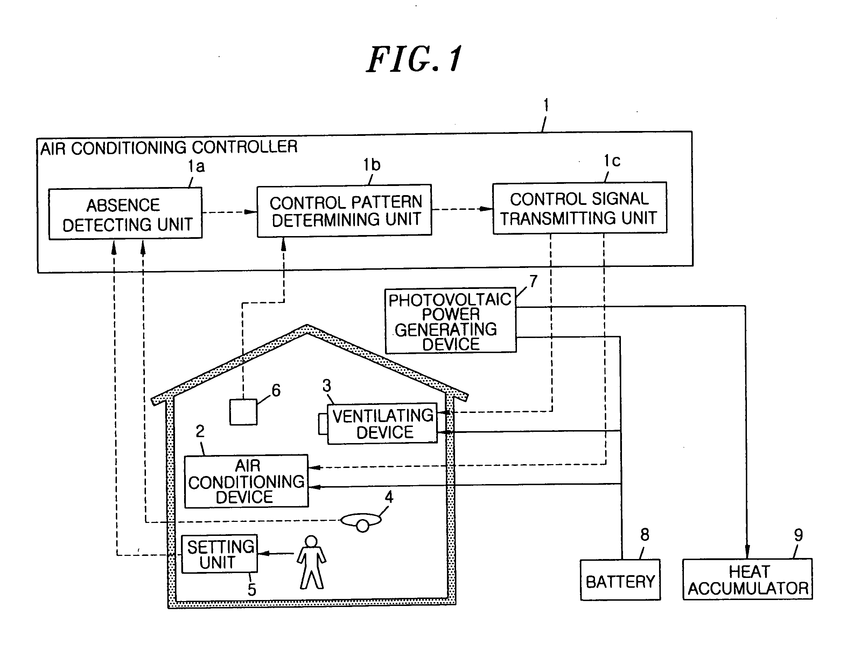

Fig. 1 shows the configuration of an air-conditioning control system for houses in accordance with the present embodiment. The air-conditioning control system includes an air conditioning controller 1 for performing an air conditioning control within a home; an air conditioning device 2 having an air conditioner and designed to cool or heat the home; a ventilating device 3 for performing ventilation between the home and the outside; a human sensor 4 for detecting a human existing within the home; a setting unit 5 operated by a family member; a temperature sensor 6 for measuring a temperature within the home; a photovoltaic power generating device 7 for generating an electric power with sunlight; a battery 8 for storing the electric power generated by the photovoltaic power generating device 7 and supplying the electric power to the air conditioning device 2 and the ventilating device 3; and a heat accumulator 9 for accumulating heat using the electric power generated by the photovoltaic power generating device 7.

The air conditioning controller 1 includes an absence detecting unit 1a serving as an absence detecting unit for detecting the absence of a human within the home, the human sensor 4 and the setting unit 5 being connected to the absence detecting unit 1a; a control pattern determining unit 1b for determining operation control patterns of the air conditioning device 2 and the ventilating device 3, the temperature sensor 6 being connected to the control pattern determining unit 1b; and a control signal transmitting unit 1c for transmitting control signals to the air conditioning device 2 and the ventilating device 3 pursuant to the control patterns determined by the control pattern determining unit 1b.

Description will now be made on the cooling operation in summer by way of example.

First, if a human exists within the home, the human sensor 4 transmits a human sensing signal to the air conditioning controller 1. In response to the human sensing signal, the absence detecting unit 1a of the air conditioning controller 1 determines that a human exists within the home and outputs an existence signal to the control pattern determining unit 1b. Responsive to the existence signal, the control pattern determining unit 1b determines, e.g., a control pattern in which the air conditioning device 2 is operated, if necessary, in combination with the ventilating device 3. Upon receiving the control pattern, the control signal transmitting unit 1c transmits control signals corresponding to the control pattern to the ventilating device 3 and the air conditioning device 2, thereby controlling the startup operations of the ventilating device 3 and the air conditioning device 2. In this manner, the air conditioning controller 1 performs an air conditioning control to cool the home.

In the air conditioning control, the measured temperature of the temperature sensor 6 is feedback controlled to become equal to a target temperature (26°C in the present embodiment) set by a user through the use of the setting unit 5.

Next, if a human goes out and does not exist within the home, the human sensing signal outputted by the human sensor 4 is cut off. The absence detecting unit 1a of the air conditioning controller 1 determines that a human does not exist within the home and outputs an absence signal to the control pattern determining unit 1b. Responsive to the absence signal, the control pattern determining unit 1b determines, e.g., a control pattern in which the air conditioning device 2 is stopped throughout an absence period and the ventilating device 3 is operated to ventilate the home during at least a part of the absence period. Upon receiving the control pattern, the control signal transmitting unit 1c transmits control signals corresponding to the control pattern to the ventilating device 3 and the air conditioning device 2, thereby controlling the startup operations of the ventilating device 3 and the air conditioning device 2. In this manner, the air conditioning controller 1 performs an air conditioning control.

In this air conditioning control, the ventilating device 3 performs ventilation throughout the absence period by which the indoor air heated to a high temperature within the closed home is exchanged with the outdoor air having a temperature lower than that of the indoor air. Thus, the thermal environment is controlled in such a way as to reduce the indoor temperature. The power consumption of the ventilating device 3 is lower than the power consumption of the air conditioning device 2 that performs cooling. As compared with a case where the air conditioning device 2 is operated throughout the absence period, it is therefore possible to save energy.

Next, when a family member who went out comes back home, the human sensor 4 transmits a human sensing signal to the air conditioning controller 1. In response to the human sensing signal, the air conditioning controller 1 performs again an air conditioning control to cool the home using the air conditioning device 2, if necessary, in combination with the ventilating device 3. In this manner, throughout the absence period, the thermal environment within the home is controlled in such a way as to make the home comfortable (e.g., to reduce the indoor temperature in summer) using the outdoor air as natural energy. Thus, with a reduced power consumption, the air conditioning device 2 restarted by a home-coming family member can perform a cooling operation to make the indoor temperature equal to a target temperature.

In the present embodiment, as described above, it is possible to provide a comfortable indoor space to a home-coming family member by using the outdoor air as natural energy to seek energy saving.

In addition to the afore-mentioned detection method in which the absence of a human within the home is detected pursuant to the human sensing signal from the human sensor 4, it may be possible to use a detection method in which the setting unit 5 is operated by a family member to set one of the existence and the absence and, then, the absence of a human within the home is detected pursuant to the setting in the setting unit 5.

### (Second Embodiment)

Just like the first embodiment, the air-conditioning control system of the present embodiment is shown in Fig. 1. The same components as those of the first embodiment will be designated by like reference symbols and will not be described.

In the air conditioning controller 1 of the present embodiment, the absence detecting unit 1a serves not only as an absence detecting unit but also as an absence period determining unit for estimating the end time of the absence period (i.e.,, the home-coming time) and then determining whether the absence period is a long period equal to or longer than a predetermined time period or a short period shorter than the predetermined time period.

The process of estimating the home-coming time and the process of determining the long period or the short period are performed based on the settings inputted by a family member through the setting unit 5 before the family member leaves home. For example, the setting unit 5 includes a unit for inputting the length of the absence period or the expected home-coming time. The home-coming time is estimated from the length of the absence period or the expected home-coming time thus inputted. The absence period equal to or longer than the predetermined time period is determined as the long period. The absence period shorter than the predetermined time period is determined as the short period. The threshold used in determining whether the absence period is the long period or the short period varies depending on the air conditioning characteristics of a building and the capacity of the ventilating device 3. As an example, the threshold is set equal to about two hours.

Alternatively, the absence detecting unit 1a may store a history of past absence periods. The absence detecting unit 1a may estimate the length of the absence period based on the absence occurring time and day in the absence period history and may perform, pursuant to the length of the absence period, the process of estimating the home-coming time and the process of determining whether the absence period is the long period or the short period.

The threshold, which is compared with the length of the absence period to determine whether the absence period is the long period or the short period, may vary with at least one of the year, month, day and hour indicating the seasons and the time zone at which the determination is made. This makes it possible to set the threshold based on the life pattern of family members which varies depending on the seasons and the time zone.

Depending on whether the absence period is the long period or the short period, the control pattern determining unit 1b changes the control pattern of the ventilating device 3 throughout the absence period. In other words, the air conditioning control throughout the absence period can be adaptively performed depending on whether the absence period is the long period or the short period.

If the absence period is the short period, the control pattern determining unit 1b performs, throughout the entire absence period, the air conditioning control by which the air conditioning device 2 is stopped and the ventilating device 3 is operated to ventilate the home as in the first embodiment.

If the absence period is the long period, the control pattern determining unit 1b stops the operations of the air conditioning device 2 and the ventilating device 3 after detecting the absence state. The air conditioning device 2 is kept stopped throughout the entire absence period. However, the ventilating device 3 is controlled to start its operation a specified time (e.g., two hours) earlier than the home-coming time of a family member. In other words, if the absence period is the long period, the ventilating device 3 is not operated throughout the entire absence period but is operated for a minimum period immediately before a family member comes back home. This makes it possible to prevent unnecessary power consumption throughout the absence period and to effectively perform the control of the thermal environment within the home using the ventilating device 3.

### (Third Embodiment)

In the air-conditioning control system of the present embodiment, the control relying on the electric power generated by the photovoltaic power generating device 7 is added to the thermal environment control of the second embodiment. The same components as those of the second embodiment will be designated by like reference symbols and will not be described.

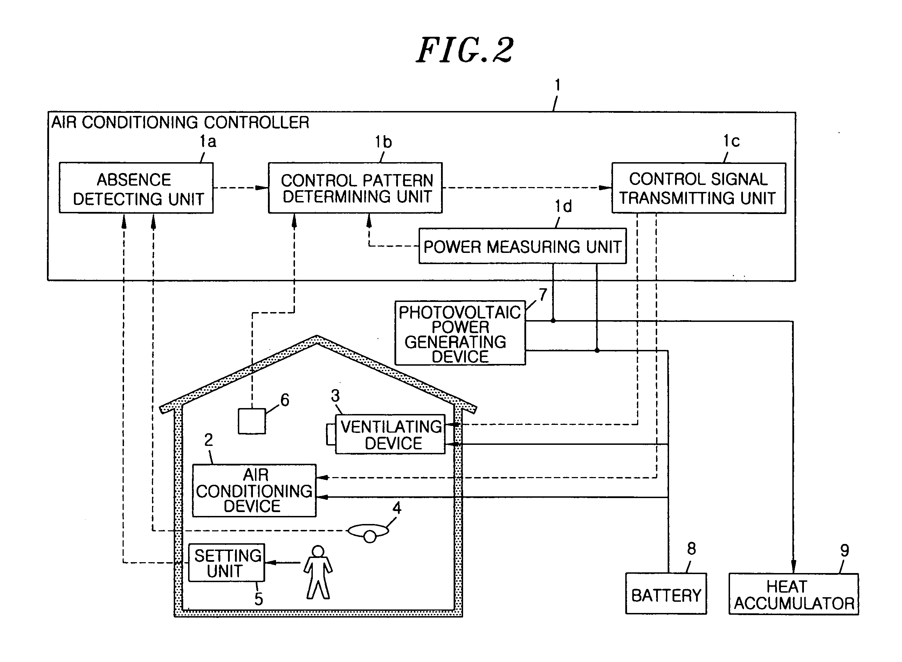

Referring to Fig. 2, the air conditioning controller 1 of the present embodiment includes a power measuring unit 1d for measuring the electric power generated by the photovoltaic power generating device 7. The value of the generated power measured by the power measuring unit 1d is outputted to the control pattern determining unit 1b. As in the second embodiment, the control pattern determining unit 1b changes the control pattern of the ventilating device 3 throughout the absence period, depending on whether the absence period is the long period or the short period.

If the absence period is the short period, the control pattern determining unit 1b performs, throughout the entire absence period, the air conditioning control by which the air conditioning device 2 is stopped and the ventilating device 3 is operated to ventilate the home.

If the absence period is the short period, the control pattern determining unit 1b controls the operations of the air conditioning device 2 and the ventilating device 3 depending on the value of the generated power measured by the generated power measuring unit 1d, for example. Specifically, if the value of the generated power is smaller than a predetermined value, the control pattern determining unit 1b stops the air conditioning device 2 and the ventilating device 3. If the value of the generated power becomes equal to or greater than the predetermined value, the control pattern determining unit 1b operates the air conditioning device 2 and the ventilating device 3.

In an alternative example, the surplus power of the photovoltaic power generating device 7 is measured. If the generated power has no surplus, the control pattern determining unit 1b stops the air conditioning device 2 and the ventilating device 3. If the generated power is surplus, the control pattern determining unit 1b operates the air conditioning device 2 and the ventilating device 3 through the effective use of the surplus power and controls the thermal environment within the home beforehand in such a way as to make the home comfortable.

The surplus power of the photovoltaic power generating device 7 referred to herein means the electric power excluding the power charged to the battery 8, the power supplied to the heat accumulator 9 and the power used in operating the home appliances. The power measuring unit 1d can measure not only the value of the generated power but also the power charged to the battery 8, the power supplied to the heat accumulator 9 and the power used in operating the home appliances. Accordingly, it is possible to calculate the surplus power.

Regardless of the magnitude of the generated power of the photovoltaic power generating device 7, the operation of the ventilating device 3 is started a specified time (e.g., two hours) earlier than the home-coming time of a family member. Regardless of existence of the surplus power, the thermal environment within the home is controlled by the ventilating device 3 in such a way as to make the home comfortable immediately before the home-coming of a family member. If the generated power of the photovoltaic power generating device 7 is surplus immediately before the home-coming of a family member, the air conditioning device 2 is also operated in combination with the ventilating device 3.

Accordingly, in the event that the air conditioning device 2 and the ventilating device 3 were operated by the surplus power throughout the absence period, it is possible to more effectively operate the ventilating device 3 immediately before the home-coming of a family member. Moreover, immediately before the home-coming of a family member, the air conditioning device 2 can be operated through the effective use of the surplus power so as to effectively improve the thermal environment.

### (Fourth Embodiment)

In the air-conditioning control system of the present embodiment, the reverse power flow control of the photovoltaic power generating device 7 is added to the thermal environment control of the second embodiment. The same components as those of the second embodiment will be designated by like reference symbols and will not be described.

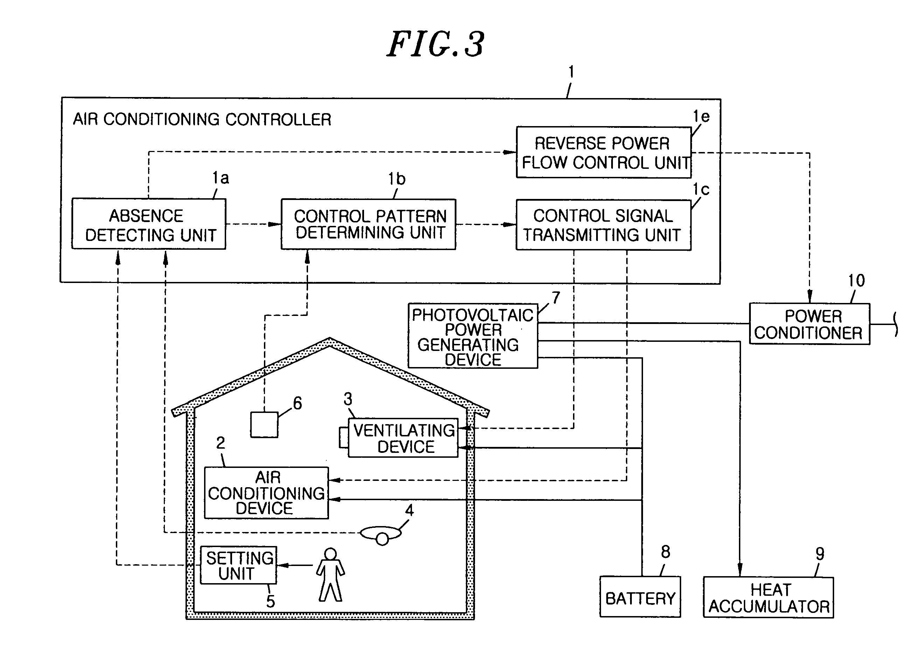

In the present embodiment, as shown in Fig. 3, the air-conditioning control system includes a power conditioner 10 for converting the DC power generated by the photovoltaic power generating device 7 to an AC power. The air-conditioning control system has a function (a reverse power flow unit) of causing the generated power to reversely flow toward a commercial power supply system. The air conditioning controller 1 includes a reverse power flow control unit 1e for controlling the reverse power flow operation of the power conditioner 10.

Depending on the length of the absence period, the absence detecting unit 1a assorts the absence period into three patterns, e.g., a short period corresponding to the absence period of less than one hour, a first long period corresponding to the absence period of not less than one hour but less than two days, and a second long period corresponding to the absence period of not less than two days. The thresholds (i.e., one hour and two days), which are compared with the length of the absence period to assort the three patterns, may vary with at least one of the year, month, day and hour indicating the seasons and the time zone at which the determination is made. The control pattern determining unit 1b changes the control pattern of the ventilating device 3 throughout the absence period, depending on whether the absence period is the short period, the first long period or the second long period.

If the absence period is the short period, the control pattern determining unit 1b performs, throughout the entire absence period, the air conditioning control by which the air conditioning device 2 is stopped and the ventilating device 3 is operated to ventilate the home.

If the absence period is the first long period or the second long period, the control pattern determining unit 1b stops the operations of the air conditioning device 2 and the ventilating device 3 after detecting the absence state. The air conditioning device 2 is kept stopped throughout the entire absence period. However, the ventilating device 3 is controlled to start its operation a specified time earlier than the home-coming time of a family member.

If the absence period is the second long period, the reverse power flow control unit 1e operates the power conditioner 10 to reversely supply the DC power generated by the photovoltaic power generating device 7 to the commercial power supply system instead of the battery 8 and the heat accumulator 9. In other words, the DC power generated by the photovoltaic power generating device 7 is charged to the battery 8 and thermally accumulated in the heat accumulator 9 throughout the absence period. However, if the absence period is the second long period, i.e., the longest period, the power loss is increased due to the discharge of the battery 8 or the heat dissipation of the heat accumulator 9. In this case, the DC power generated by the photovoltaic power generating device 7 is reversely supplied and sold to other customers, whereby the generated power can be effectively used during the long-term absence.

In the first through fourth embodiments, a summer cooling operation has been taken as an example to describe the configuration of providing a comfortable indoor space to a home-coming family member while using the outdoor air as natural energy to seek energy saving. In a winter heating operation, it is equally possible to obtain the same effect by using the outdoor air having a temperature higher than the indoor temperature.

An outdoor temperature measuring unit may be provided to measure the outdoor temperature. The ventilating device 3 may be operated if a human does not exist within the home and the indoor temperature measured a specified time earlier than the expected home-coming time is higher than or lower than the manually-set target temperature and the outdoor temperature. The ventilating device 3 may not be operated in other cases. This is to keep the ventilating device 3 stopped when the indoor temperature is lower than the outdoor temperature in summer or when the indoor temperature is higher than the outdoor temperature in winter. It may also be possible to stop the ventilating device 3 when the indoor temperature reaches a target temperature.

In the embodiments described above, the ventilating device 3 is a ventilating fan. The ventilating device 3 may include other devices capable of introducing the outdoor air into the home, e.g., an electric window.

In the embodiments described above, the air-conditioning control system is installed in a house by way of example. However, the air-conditioning control system may be installed in any place where the indoor space and the outdoor space are divided, e.g., in a residential complex, an apartment, an office, a shopping arcade and a factory.

While the invention has been shown and described with respect to the embodiments, it will be understood by those skilled in the art that various changes and modifications may be made without departing from the scope of the invention as defined in the following claims.

## Claims

1. An air-conditioning control system, comprising:
a ventilating device for performing ventilation between an indoor space and an outdoor space;
an absence detecting unit for detecting absence of a human within the indoor space; and
an air conditioning controller adapted to operate, when the absence of the human is detected by the absence detecting unit, the ventilating device during at least a part of an absence period to control a thermal environment within the indoor space.

2. The system of claim 1, further comprising:
an air conditioning device for cooling or heating the indoor space,
wherein the air conditioning controller is adapted to operate, when the absence of the human is detected by the absence detecting unit, operate the ventilating device during at least a part of the absence period such that, when operating the air conditioning device next time, the thermal environment within the indoor space is controlled in such a way as to reduce a power consumption of the air conditioning device.

3. The system of claim 2, wherein the absence detecting unit is adapted to, when the absence of the human is detected by the absence detecting unit, make determination whether the absence period is a long period equal to or longer than a predetermined time period or a short period shorter than the predetermined time period, and the air conditioning controller is adapted to control the ventilating device in different control patterns depending on whether the absence period is the long period or the short period.

4. The system of claim 3, wherein the absence detecting unit determines whether the absence period is the long period or the short period by comparing the length of the absence period with a threshold, and the threshold is varied with at least one of year, month, day and hour at which the determination is made.

5. The system of claim 3 or 4, wherein the absence detecting unit determines whether the absence period is the long period or the short period by estimating an end time of the absence period, and the air conditioning controller is adapted to continuously operate the ventilating device throughout the absence period if the absence period is the short period, and start an operation of the ventilating device a specified time earlier than the end time of the absence period if the absence period is the long period.

6. The system of claim 5, further comprising:
a photovoltaic power generating device for generating electric power by using sunlight to supply the electric power to the air conditioning device and the ventilating device,
wherein the air conditioning controller is adapted to operate the air conditioning device and the ventilating device throughout the absence period if the absence period is the long period and the electric power generated by the photovoltaic power generating device is equal to or greater than a predetermined value, and operate the ventilating device a specified time earlier than the end time of the absence period regardless of the magnitude of the electric power generated by the photovoltaic power generating device.

7. The system of claim 3 or 4, further comprising:
a photovoltaic power generating device for generating electric power by using sunlight to supply the electric power to the air conditioning device and the ventilating device;
a battery for storing the electric power generated by the photovoltaic power generating device and supplying the electric power to the air conditioning device and the ventilating device; and
a reverse power flow control unit for reversely supplying the electric power generated by the photovoltaic power generating device to a commercial power supply system,
wherein the air conditioning controller is adapted to control, if the absence period is the long period, the reverse power flow control unit to reversely supply the electric power generated by the photovoltaic power generating device to the commercial power supply system instead of supplying the electric power to the battery.

8. The system of claim 7, wherein the absence detecting unit estimates an end time of the absence period and makes determination whether the absence period is a short period shorter than a first predetermined time period, a first long period equal to or longer than the first predetermined time period but shorter than a second predetermined time period, or a second long period longer than the second predetermined time period, and
wherein the air conditioning controller is adapted to continuously operate the ventilating device throughout the absence period if the absence period is the short period, start an operation of the ventilating device a specified time earlier than the end time of the absence period if the absence period is the first long period or the second long period, and control the reverse power flow control unit to reversely supply the electric power generated by the photovoltaic power generating device to the commercial power supply system instead of supplying the electric power to the battery if the absence period is the second long period.
